(19) **Europäisches Patentamt**

**European Patent Office**

**Office européen des brevets**

(11) **EP 1 462 323 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
**B60R 22/415** (2006.01)

(21) Anmeldenummer: **04090031.8**

(22) Anmeldetag: **04.02.2004**

(54) **Gurtaufroller für einen Sicherheitsgurt**

Retractor for a safety belt

Enrouleur pour ceinture de sécurité

(84) Benannte Vertragsstaaten:
**DE FR GB SE**

(30) Priorität: **28.02.2003 DE 10310020**

(43) Veröffentlichungstag der Anmeldung:
**29.09.2004 Patentblatt 2004/40**

(73) Patentinhaber: **TAKATA-PETRI (Ulm) GmbH**
**89081 Ulm (DE)**

(72) Erfinder:
• **Fleischmann, Robert**
**89233 Neu-Ulm (DE)**
• **Grasser, Thomas**
**89186 Illerrieden (DE)**
• **Benz, Jochen**
**89567 Sontheim (DE)**
• **Lambrecht, Stefan**
**89275 Elchingen (DE)**
• **Scholler, Oskar**
**89269 Vöhringen (DE)**

(74) Vertreter: **Fischer, Uwe et al**
**Patentanwälte,**
**Maikowski & Ninnemann,**
**Postfach 15 09 20**
**10671 Berlin (DE)**

(56) Entgegenhaltungen:
DE-A- 19 960 554    US-A- 5 518 197
US-A- 5 904 371

**Beschreibung**

Die Erfindung bezieht sich auf einen Gurtaufroller für einen Sicherheitsgurt mit den Merkmalen gemäß dem Oberbegriff des Anspruchs 1.

Wird mit einem Sicherheitsgurt beispielsweise ein Kind in einem Kraftfahrzeug angeschnallt, so besteht die Gefahr, dass das Kind den Gurt während der Fahrt spielerisch aus dem Gurtaufroller herauszieht und dadurch die gesamte zur Verfügung stehende Gurtlänge verlängert; dadurch kann die Sicherheitshaltefunktion des Sicherheitsgurtes beeinträchtigt oder sogar völlig außer Kraft gesetzt werden.

Auch bei Erwachsenen kann es vorkommen, dass sie gelegentlich den Gurt während der Fahrt weiter herausziehen, als dies zur Gewährleistung der erforderlichen Sicherheit zulässig ist, beispielsweise deshalb, um den Fahrkomfort zu erhöhen.

Im Hinblick auf dieses Problem ist aus der die Merkmale gemäß dem Oberbegriff des Anspruchs 1 offenbarenden US-Patentschrift US 5,518,197 ein Gurtaufroller für einen Sicherheitsgurt bekannt, der einen sogenannten ALR-(Automatic Locking Retractor)-Betrieb ermöglicht. Unter einem ALR-Betrieb wird eine Betriebsart des Gurtaufrollers verstanden, bei der ein Herausziehen des Sicherheitsgurtes nach einem erfolgten Anlegen des Sicherheitsgurtes an dem zu sichernden Fahrzeuginsassen verhindert wird. Hierzu weist der vorbekannte Gurtaufrolller eine drehfest mit der Gurtspule des Gurtaufrollers verbundene Excenterscheibe auf, die eine Nockenscheibe unmittelbar antreibt. Die Nockenscheibe und die Excenterscheibe bilden ein sogenanntes Taumelgetriebe, das als Untersetzungsgetriebe ausgelegt ist.

Der vorbekannte Gurtaufroller weist darüber hinaus eine Sperrklinke auf, die in einer Sperrlage - also im aktivierten Zustand - ein sich mit der Gurtspule des Gurtaufrollers mitdrehendes Ratschenzahnrad in Gurtausziehdrehrichtung des Sicherheitsgurtes blockiert und in einer Freigabelage - also im inaktiven Zustand - das Ratschenzahnrad unbeeinflusst lässt, weil sie außer Eingriff mit dem Ratschenzahnrad steht.

Die Nockenscheibe ist bei dem vorbekannten Gurtaufroller derart ausgestaltet, dass sie die Sperrklinke von der Freigabelage in die Sperrlage und umgekehrt von der Sperrlage in die Freigabelage umschalten kann. Befindet sich die Sperrklinke in ihrer Sperrlage, so wird der vorbekannte Gurtaufroller im ALR-Betrieb betrieben, weil nämlich die Sperrklinke mit dem Ratschenzahnrad in Eingriff steht und dadurch ein Ausziehen des Sicherheitsgurtes in Ausziehrichtung blockiert wird. Befindet sich die Sperrklinke hingegen in ihrer Freigabelage, so stehen die Sperrklinke und das Ratschenzahnrad außer Eingriff und der Gurtaufroller kann in üblicher Weise betrieben werden. Unter einem "üblichen Betrieb" des Gurtaufrollers ist dabei zu verstehen, dass der Sicherheitsgurt auch nach einem Anlegen noch herausgezogen werden kann, sofern das Herausziehen relativ langsam erfolgt; die "übliche Betriebsart" wird auch als ELR-(Emergency Locking Retractor)-Betrieb bezeichnet.

Bei dem vorbekannten Gurtaufroller ist es für eine einwandfreie Funktion erforderlich, dass die Gesamtlänge des Sicherheitsgurtes relativ genau an das Untersetzungsverhältnis des Untersetzungsgetriebes angepasst ist; denn nur bei einer relativ genauen Anpassung der Länge des Sicherheitsgurtes an das Über- bzw. Untersetzungsverhältnis ist gewährleistet, dass nach einer Deaktivierung der Sperrklinke durch die Nockenscheibe diese nicht ungewollt wieder aktiviert wird. Die Schaltpunkte sind bei dem vorbekannten Gurtaufroller also durch das Untersetzungsverhältnis des Untersetzungsgetriebes fest vorgegeben.

Aus der Druckschrift DE 199 60 554 ist ebenfalls ein Gurtaufroller mit ARL-Betrieb bekannt. Dieser Gurtaufroller arbeitet mit einer Nockenscheibe mit zwei beabstandeten Schaltnocken. Die Nockenscheibe wird mittelbar durch eine Excenterscheibe angetrieben.

Der Erfindung liegt daher die Aufgabe zugrunde, einen Gurtaufroller anzugeben, der einen zuverlässigen ALR-Betrieb ermöglicht und besonders toleranzunabhängig ist.

Diese Aufgabe wird ausgehend von einem Gurtaufroller der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Nockenscheibe einen Einschaltnocken zum Einschalten der Sperrlage der Sperrklinke und einen davon getrennt angeordneten Ausschaltnocken zum Einschalten der Freigabelage der Sperrklinke aufweist und dass die Sperrklinke einen Einschalthebel, der ausschließlich mit dem Einschaltnocken zusammenwirkt, und einen Ausschalthebel, der ausschließlich mit dem Ausschaltnocken zusammenwirkt, aufweist.

Ein wesentlicher Vorteil des erfindungsgemäßen Gurtaufrollers ist darin zu sehen, dass aufgrund des Vorhandenseins zweier Schaltnocken, nämlich eines Einschaltnockens und eines Ausschaltnockens, die Länge des Sicherheitsgurtes unabhängig bzw. weitgehend unabhängig von dem Untersetzungsverhältnis des Untersetzungsgetriebes gewählt werden kann. Denn bei dem erfindungsgemäßen Gurtaufroller ist zum Einschalten der Sperrlage ein separater Sperrnocken bzw. Einschaltnocken und zum Abschalten der Sperre ein separater Ausschaltnocken vorhanden. Der Kern der Erfindung besteht also darin, für das Einschalten der Sperrlage der Sperrklinke einen Einschaltnocken und für das Einschalten der Freigabelage der Sperrklinke einen davon getrennten, separat angeordneten Ausschaltnocken vorzusehen.

Ein weiterer wesentlicher Vorteil des erfindungsgemäßen Gurtaufrollers ist darin zu sehen, dass dieser ohne weiteres für verschiedene Fahrzeugmodelle mit verschiedenen fahrzeugherstellerseitig vorgegebenen Schaltpunkten zum Deaktivieren der Schaltklinke eingesetzt werden kann, ohne dass eine Anpassung des Übersetzungsverhältnisses des Untersetzungsgetriebes erforderlich ist; denn aufgrund des Vorhandenseins zweier Schaltnocken lassen sich die Schaltpunkte - je nach vorgegebener Fahrzeugspezifikation - durch eine entsprechende räumliche Anordnung der Schaltnocken weitgehend unabhängig von dem Übersetzungsverhältnis des Untersetzungsgetriebes einstellen.

Ein zusätzlicher wesentlicher Vorteil des erfindungsgemäßen Gurtaufrollers besteht in seinem einfachen und damit kostengünstigen Aufbau; denn die Nockenscheibe wird unmittelbar durch die Excenterscheibe angetrieben. Weitere bzw. zusätzliche Steuerscheiben oder Getriebescheiben zwischen der Nockenscheibe und der Excenterscheibe sind nicht vorhanden, so dass Material und Montagekosten eingespart werden.

Eine besonders zuverlässige Funktion des Gurtaufrollers wird erfindungsgemäß dadurch erreicht, dass die Sperrklinke einen Einschalthebel aufweist, der ausschließlich mit dem Einschaltnocken zusammenwirkt, und dass die Sperrklinke zusätzlich einen Ausschalthebel aufweist, der ausschließlich mit dem Ausschaltnocken der Nockenscheibe zusammenwirkt. Aufgrund dieser Ausgestaltung des Gurtaufrollers wird sehr zuverlässig sichergestellt, dass es zu keinem ungewollten Umschalten der Sperrklinke kommen kann, da diese nur durch den jeweils zugeordneten Schaltnocken der Nockenscheibe und den jeweils passenden Schalthebel umschaltbar ist.

Ein Umschalten der Sperrklinke von der Freigabelage in die Sperrlage bzw. umgekehrt lässt sich besonders einfach ermöglichen, wenn die Sperrklinke um eine Drehachse drehbar gelagert ist. Bevorzugt ist die Drehachse an einem Gehäuse des Gurtaufrollers angeordnet.

Zur Arretierung der Lage der Sperrklinke, also zur Arretierung in der Sperrlage bzw. zur Arretierung in der Freigabelage, sollte bevorzugt eine Feder vorhanden sein, mit der die jeweilige Lage der Sperrklinke fixiert wird.

Die Feder zum Fixieren der Lage der Sperrklinke kann beispielsweise eine Metallfeder sein; anstelle einer Metallfeder kann auch eine Kunststofffeder eingesetzt werden, die bevorzugt durch ein beispielsweise an das Gehäuse des Gurtaufrollers angespritztes Kunststoffelement gebildet ist.

Besonders einfach und damit vorteilhaft lassen sich die Sperrlage und die Freigabelage der Sperrklinke fixieren, wenn die Feder zwei benachbarte Ausnehmungen aufweist, von denen die eine eine Rastnase der Sperrklinke in der Sperrlage und von denen die andere die Rastnase der Sperrklinke in der Freigabelage hält bzw. fixiert.

Im Übrigen kann die Feder vorteilhaft auch derart ausgestaltet sein, dass sie beim Umschalten der Sperrklinke von der Sperrlage in die Freigabelage oder umgekehrt von der Freigabelage in die Sperrlage einen Totpunkt überwinden muss.

Besonders einfach und damit vorteilhaft lässt sich gewährleisten, dass der Einschalthebel ausschließlich mit dem Einschaltnocken und der Ausschalthebel ausschließlich mit dem Ausschaltnocken zusammenwirkt, wenn der Einschalthebel derart dimensioniert und angeordnet ist, dass er von dem Ausschaltnocken nicht berührt bzw. ausgelenkt werden kann, und wenn der Ausschalthebel derart dimensioniert und angeordnet ist, dass er von dem Einschaltnocken nicht berührt bzw. ausgelenkt werden kann.

Eine solche Dimensionierung und Anordnung des Einschalthebels, des Ausschalthebels, des Einschaltnockens und des Ausschaltnockens lässt sich besonders einfach und damit vorteilhaft gewährleisten, wenn einer der beiden Schaltnocken vom Mittelpunkt der Nockenscheibe einen größeren Abstand als der andere der beiden Schaltnocken aufweist.

Darüber hinaus können der Ausschaltnocken und der Einschaltnocken gegenüber der übrigen Nockenscheibe erhaben sein. Die Höhe des einen der beiden Schaltnocken ist bevorzugt - bezogen auf die Nockenscheibe - größer als die Höhe des anderen der beiden Ausschaltnocken; mit anderen Worten ist der eine Schaltnocken "erhabener" als der andere Schaltnocken.

Vorzugsweise weist dabei der erhabenere Schaltnocken einen kleineren Abstand vom Mittelpunkt der Nockenscheibe auf als der weniger erhabene Schaltnocken.

Im Übrigen wird es als vorteilhaft angesehen, wenn die Nockenscheibe einen äußeren verzahnten Rand aufweist, dessen Zähne von einem gehäusefesten Innenzahnkranz mit größerem Durchmesser und mit komplementären Zähnen derart umgeben sind, dass die Nockenscheibe auf jeweils einem begrenzten Umfangsbereich mit dem Innenzahnkranz in kämmendem Eingriff steht und dass diametral gegenüber die Zähne einen solchen radialen Abstand aufweisen, dass sich die Nockenscheibe beim Drehen der Gurtspule auf dem Innenzahnkranz abwälzt.

Vorzugsweise weist der Innenzahnkranz eine größere Anzahl von Zähnen als die Nockenscheibe auf, um eine Untersetzung des durch die Excenterscheibe, die Nockenscheibe und den gehäusefesten Innenzahnkranz gebildeten Taumelgetriebes zu bewirken. Vorzugsweise weist die Nockenscheibe eine Zahnanzahl von $Z1 = 26$ und der gehäusefeste Innenzahnkranz eine Zahnanzahl von $Z2 = 27$ auf. Das Übersetzungsverhältnis I des Getriebes ergibt sich damit zu:

$$I = \frac{Z1}{Z2 - Z1} = \frac{26}{27 - 26} = 26.$$

Bei einer solchen Dimensionierung des Getriebes ergibt sich bei einer Rotation der Gurtspule des Gurtaufrollers bzw. der Excenterscheibe um 360 ° eine Drehung der Nockenscheibe um

$$\frac{360°}{26} = 13,85°$$

Zur Erläuterung der Erfindung zeigt:

| | |
|---|---|
| Figur 1 | ein Ausführungsbeispiel für einen erfindungsgemäßen Gurtaufroller von der Seite in einer dreidimensionalen Prinzipdarstellung, |
| Figuren 2 bis 10 | das Umschalten einer Sperrklinke des Gurtaufrollers gemäß der Figur 1 im zeitlichen Verlauf, |
| Figuren 5a und 8a | das Umschalten der Sperrklinke in einer Detaildarstellung und |
| Figuren 11a, 11b, 12a, 12b, 13a, 13b, 14a und 14b | die Dimensionierung der Schaltnocken der Nockenscheibe und der Sperrklinke bei dem Ausführungsbeispiel gemäß der Figur 1 im Detail. |

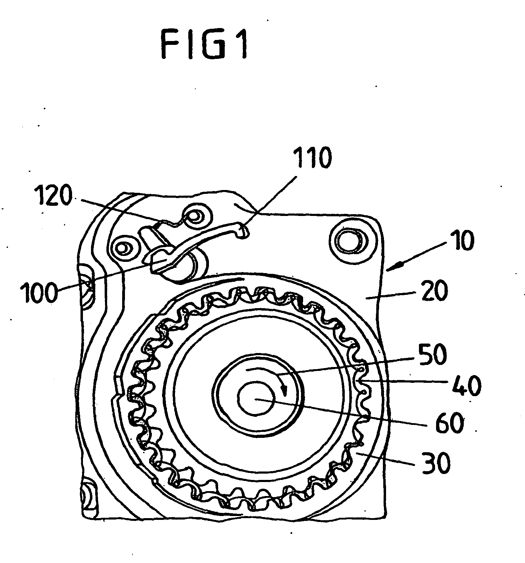

In der Figur 1 erkennt man ein Ausführungsbeispiel für einen erfindungsgemäßen Gurtaufroller 10. Der Gurtaufroller 10 weist ein Gehäuse 20 auf, in dem ein Innenzahnkranz 30 ausgebildet ist. Der Innenzahnkranz 30 weist eine Zahnanzahl Z2 = 27 auf.

In dem Innenzahnkranz 30 ist eine Nockenscheibe 40 mit einem verzahnten Rand angeordnet. Die Nockenscheibe 40 weist eine Zahnanzahl Z1 = 26 auf.

Die Nockenscheibe 40 wird unmittelbar von einer Excenterscheibe 50 angetrieben, die sich um eine Drehachse 60 einer in der Figur 1 nicht dargestellten Gurtspule dreht, und zwar drehfest mit der Gurtspule. Der Innenzahnkranz 30 ist konzentrisch zur Drehachse 60 der Gurtspule und damit konzentrisch zur Gurtspule angeordnet.

Der Durchmesser der Nockenscheibe 40 und der Durchmesser des Innenzahnkranzes 30 sind dabei so gewählt, dass die Nockenscheibe 40 auf jeweils einem begrenzten Umfangsbereich mit dem Innenzahnkranz 30 in kämmendem Eingriff steht und dass diametral gegenüber die Zähne der Nockenscheibe 40 und die des Innenzahnkranzes 30 einen solchen radialen Abstand voneinander aufweisen, dass sich die Nockenscheibe 40 beim Drehen der Excenterscheibe 50 um die Drehachse 60 auf dem Innenzahnkranz 30 abwälzt.

Die Excenterscheibe 50, die Nockenscheibe 40 und der Innenzahnkranz 30 bilden somit ein sogenanntes "Taumelgetriebe". Das Untersetzungsverhältnis des Taumelgetriebes ergibt sich gemäß folgender Gleichung:

$$I = \frac{Z1}{Z2 - Z1} = \frac{26}{27 - 26} = 26.$$

In der Figur 1 ist darüber hinaus eine Sperrklinke 100 zu erkennen, die einen Rastarm 110 aufweist. Je nach der Stellung bzw. der Lage der Sperrklinke 100 steht der Rastarm 110 in Eingriff mit einem in der Figur 1 nicht dargestellten Ratschenzahnrad, das sich mit der Gurtspule des Gurtaufrollers 10 mitdreht.

Das "Mitdrehen" des Ratschenzahnrades kann dabei beispielweise dadurch erreicht werden, dass die Gurtspule und des Ratschenzahnrad drehfest miteinander verbunden sind; in diesem Fall wäre die Sperrklinke in der Sperrlage lasttragend.

Alternativ kann das "Mitdrehen" auch dadurch erreicht werden, dass das Ratschenzahnrad und die Gurtspule "federnd" verbunden sind; bei einer "federnden" Verbindung ist ein "Verdrehen" der Gurtspule und des Ratschenzahnrades relativ zueinander möglich. In diesem alternativen Fall würde - im Falle der Sperrlage der Sperrklinke - zwar das Ratschenzahnrad gesperrt werden, nicht jedoch die Gurtspule: Die Gurtspule würde sich aufgrund der federnden Lage weiterdrehen können, so dass ein "Differenzwinkel" zwischen dem Ratschenzahnrad und der Gurtspule auftritt. Bei Auftreten eines solchen Fehlwinkels kann dann - durch entsprechende Führungs- bzw. Schaltkulissen - die Retraktorsperrklinke des Gurtaufrollers aktiviert werden, die dann lasttragend die Gurtspule arretiert. Bei dieser alternativen Ausgestaltung des "Mitdrehens" des Ratschenzahnrades ist die Sperrklinke also nicht lasttragend, sondern führt lediglich die Funktion eines "Schaltarmes" bzw. eines "Auslösearmes" aus, durch den die Retraktorsperrklinke des Gurtaufrollers aktiviert wird.

Wie sich in der Figur 1 darüber hinaus erkennen lässt, wird die Sperrklinke 100 in ihrer jeweiligen Lage durch eine Feder 120 gehalten.

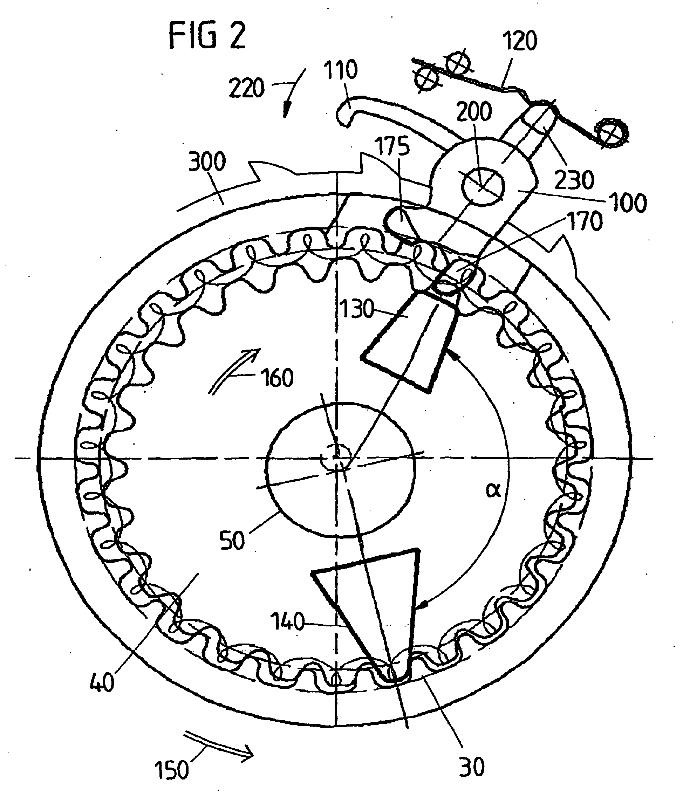

Die Sperrklinke 100 kann durch Schaltnocken der Nockenscheibe 40 umgeschaltet werden, wie im Zusammenhang mit den Figuren 2 ff erläutert werden wird.

In der Figur 2 erkennt man eine Detaildarstellung des Gurtaufrollers 10 gemäß der Figur 1; aus der Detaildarstellung lässt sich das Zusammenwirken der Sperrklinke 100 mit der Nockenscheibe 40 erkennen.

In der Figur 2 ist dargestellt, dass die Nockenscheibe 40 zwei Schaltnocken aufweist, nämlich einen Einschaltnocken 130 und einen Ausschaltnocken 140. Mit dem Einschaltnocken 130 und dem Ausschaltnocken 140 lässt sich die Sperrklinke 100 wie folgt umschalten:

Wird das Gurtband aus dem Gurtaufroller 10 herausgezogen, so dreht sich die Gurtspule des Gurtaufrollers 10 entlang der Pfeilrichtung des Pfeils 150. Da die Excenterscheibe 50 mit der Gurtspule drehfest verbunden ist, dreht sich die Excenterscheibe 50 entsprechend mit und lenkt die Nockenscheibe 40 entsprechend aus. Aufgrund dieser Auslenkung der Nockenscheibe 40 wälzt sich die Nockenscheibe 40 auf dem Innenzahnkranz 30 ab und dreht sich entlang der Pfeilrichtung 160, also entgegengesetzt zur Drehrichtung der Excenterscheibe 50. Aufgrund dieser Drehung der Nockenscheibe 40 wird der Einschaltnocken 130 gegen einen Einschalthebel 170 der Sperrklinke 100 bewegt. Sobald der Einschaltnocken 130 gegen den Einschalthebel 170 stößt, wird die Sperrklinke 100 um ihre Drehachse 200 gedreht, so dass der Rastarm 110 der Sperrklinke 100 entlang der Pfeilrichtung 220 nach unten bewegt wird.

Im Übrigen ist in der Figur 2 der Ausschalthebel 175 zu erkennen, der von dem Einschaltnocken 130 nicht erfasst wird.

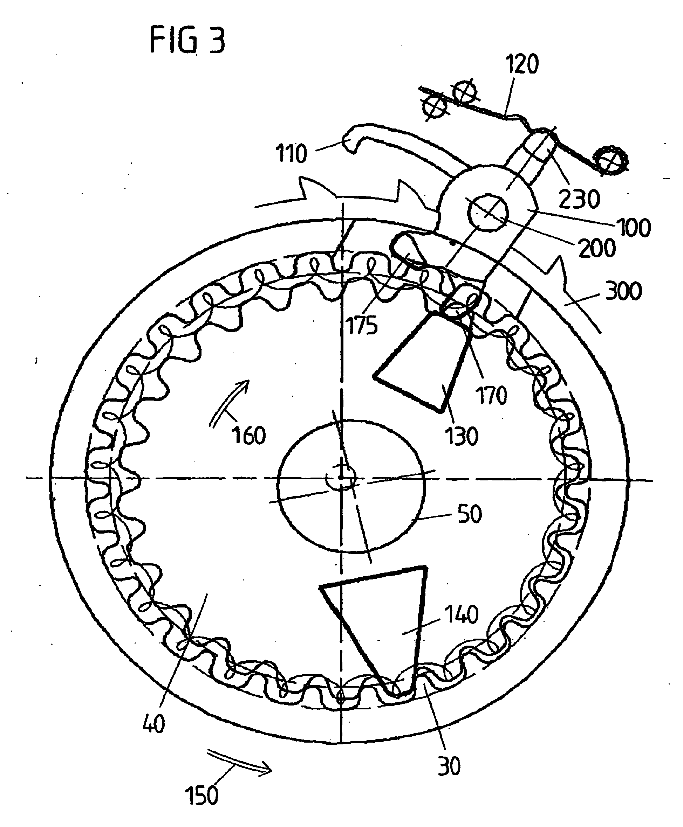

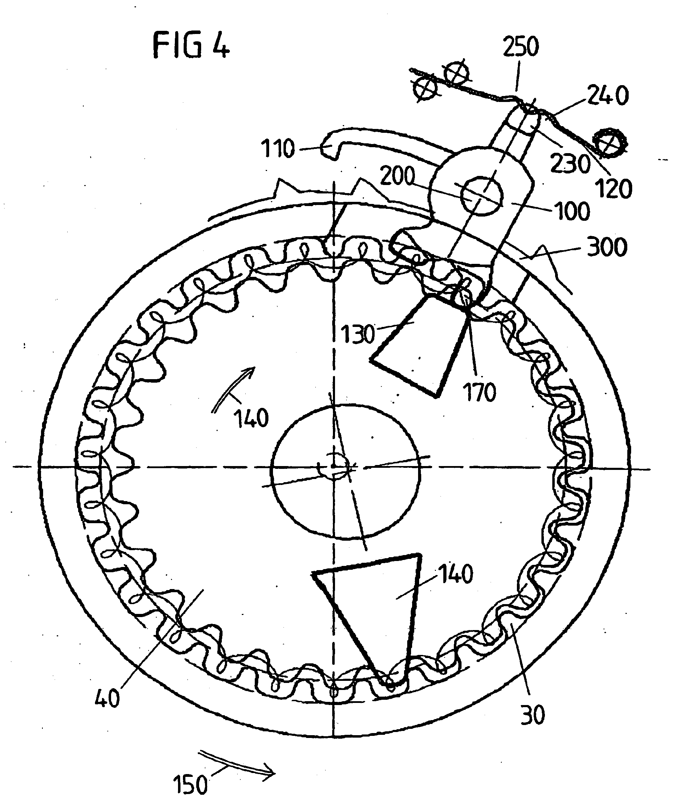

Der genaue Bewegungsablauf der Sperrklinke 100 und des Einschaltnockens 130 lässt sich im zeitlichen Verlauf den Figuren 2, 3 und 4 entnehmen. Konkret erkennt man in der Figur 4, dass der Einschaltnocken 130 die Sperrklinke 100 derart ausgelenkt hat, dass eine Rastnase 230 der Sperrklinke 100 aus einer ersten Ausnehmung 240 der Feder 120 herausbewegt wurde. Konkret befindet sich die Rastnase 230 der Sperrklinke 100 zwischen der ersten Ausnehmung 240 und einer zweiten Ausnehmung 250 der Feder 120.

Wie sich den Figuren 2 bis 4 außerdem entnehmen lässt, dient die erste Ausnehmung 240 der Feder 120 dazu, die Sperrklinke 100 in einer Lage - nachfolgend Freigabelage genannt - zu fixieren, in der der Rastarm 110 der Sperrklinke 100 außer Eingriff mit dem Ratschenzahnrad 300 des Gurtaufrollers 10 steht.

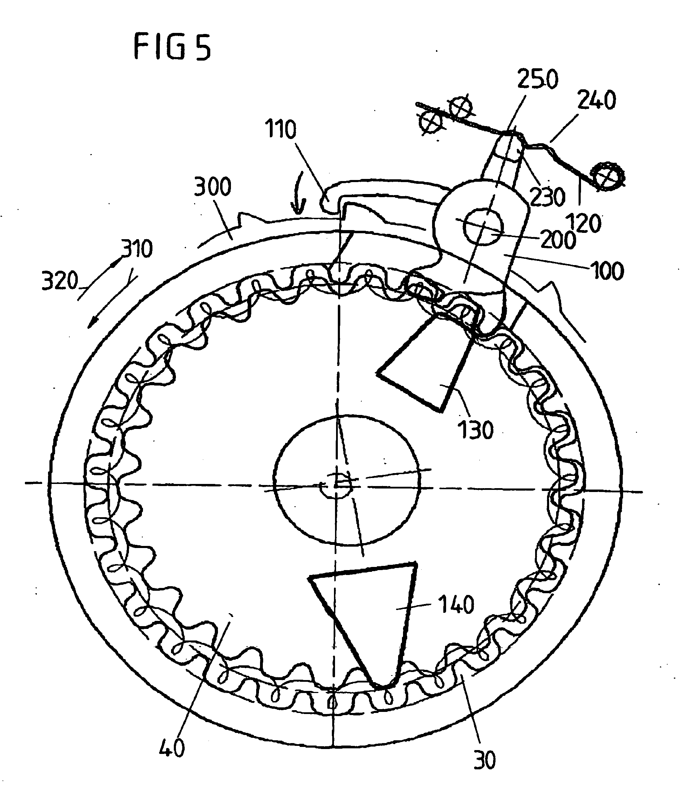

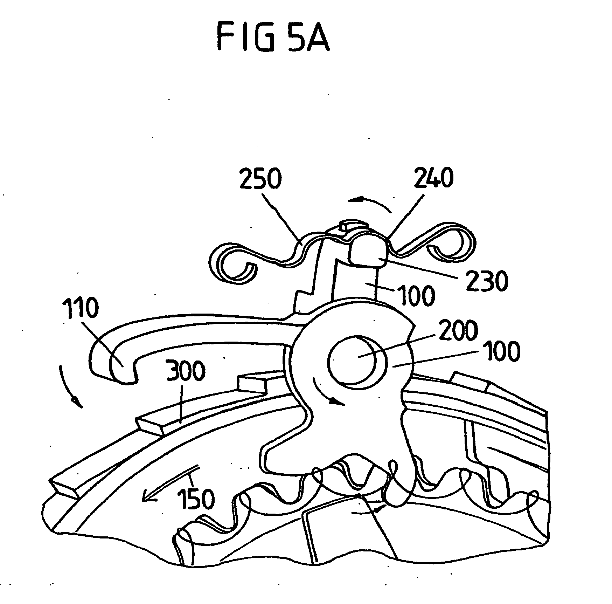

Der Schaltzustand - wie er in der Figur 4 gezeigt ist - ist jedoch nicht stabil, weil nämlich - aufgrund der Federkraft der Feder 120 - die Rastnase 230 entweder in die erste Ausnehmung 240 oder in die zweite Ausnehmung 250 der Feder 120 springen "will" bzw. wird. Aufgrund der Auslenkung des Einschalthebels 170 durch den Einschaltnocken 130 wird die Rastnase 230 in die zweite Ausnehmung 250 der Feder 120 springen. Dieses "Hinüberspringen" der Rastnase 230 in die zweite Ausnehmung 250 der Feder 120 ist in der Figur 5 im Detail gezeigt. Man erkennt, dass die Sperrklinke 100 um ihre Drehachse 200 um ca. 20 ° gedreht wurde, so dass nunmehr der Rastarm 110 mit dem Ratschenzahnrad 300 in Eingriff steht. Im Übrigen sind aber die Länge des Einschalthebels 170 und die Länge des Ausschalthebels 175 so gewählt, dass die Rastnase 230 stets über den in der Figur 4 gezeigten Totpunkt "hinübergeführt" wird, also unabhängig von der Federwirkung der Feder 120.

Der Rastarm 110 verhindert nun, dass das Ratschenzahnrad 300 entlang der Pfeilrichtung 310 (Gurtausziehrichtung) gedreht werden kann; aufgrund des eingerasteten Rastarmes 110 ist nunmehr ausschließlich eine Bewegung des Ratschenzahnrades 300 entlang der Pfeilrichtung 320 (Gurteinziehrichtung) möglich. Dies bedeutet, dass die Gurtrolle des Gurtaufrollers 10 ebenfalls nur noch entlang der Drehrichtung 320 gedreht werden kann und der Gurt des Gurtaufrollers 10 nur noch in den Gurtaufroller hineingezogen, aber nicht mehr aus dem Gurtaufroller herausgezogen werden kann.

Da sich die Gurtspindel und damit die Excenterscheibe 50 ebenfalls nur noch entlang der Pfeilrichtung 320 drehen können, kann sich die Nockenscheibe 40 nur noch entlang der Pfeilrichtung 310 bewegen, da sich nämlich die Nockenscheibe 40 stets anders herum als die Excenterscheibe 50 dreht.

Das Umschalten der Sperrklinke 100 von der Freigabelage in die Sperrlage gemäß der Figur 5 ist in der Figur 5a nochmals in dreidimensionaler Darstellung im Detail gezeigt.

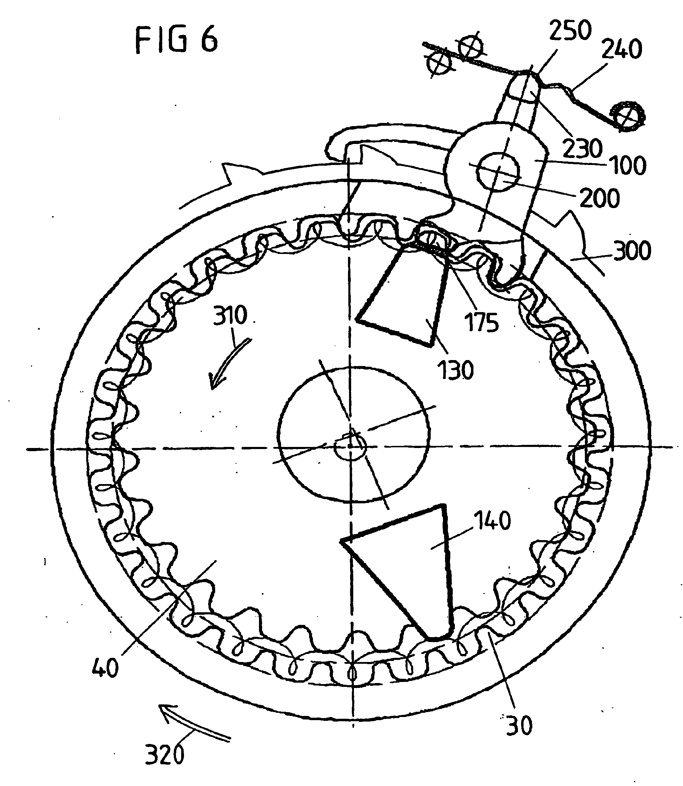

In den Figuren 5 und 6 lässt sich erkennen, dass bei einem Drehen der Nockenscheibe 40 entlang der Drehrichtung 310 der Einschaltnocken 130 ein zweites Mal an der Sperrklinke 100 vorbeigeführt wird. Bei diesem Vorbeiführen des Einschaltnockens 130 ist jedoch sichergestellt, dass es zu keinem Deaktivieren der Sperrklinke 100 bzw. zu einem Wegdrehen des Rastarmes 110 von dem Ratschenzahnrad 300 kommen kann.

Dies wird bei dem Gurtaufroller 10 konkret dadurch erreicht, dass der Einschalthebel 170 derart ausgestaltet und angeordnet ist, dass er in der in den Figuren 5 und 6 dargestellten Sperrlage der Sperrklinke 100 nicht mehr von dem Einschaltnocken 130 erfasst werden kann. Der Einschaltnocken 130 wird somit nach dem "Einschalten" der Sperrklinke an dem Einschalthebel 170 vorbeigeführt, ohne dass es zu einem Rückstellen der Sperrklinke 100 kommen kann.

Darüber hinaus ist die Sperrklinke 100 derart ausgestaltet, dass auch der Ausschalthebel 175 der Sperrklinke 100 nicht von dem Einschaltnocken 130 erfasst werden kann. Damit ist sichergestellt, dass es bei einem Zurückdrehen des Einschaltnockens 130 vorbei an der Sperrklinke 100 zu keiner Deaktivierung der Sperrklinke 100 kommen kann und dass somit der Rastarm 110 der Sperrklinke 100 in Eingriff mit dem Ratschenzahnrad 300 bleibt.

Zusammengefasst lässt sich somit feststellen, dass der Einschaltnocken 130 nach einem Einschalten der Sperrlage der Sperrklinke 100 bzw. nach einem Aktivieren der Sperrklinke 100 nicht mehr zu einem Umschalten bzw. zu einer Deaktivierung der Sperrklinke führen kann. Somit kann der Sicherheitsgurt des Gurtaufrollers 100 ohne weiteres in den Gurtaufroller zurückgleiten, ohne dass es zu einer Deaktivierung der Sperrklinke 100 kommt.

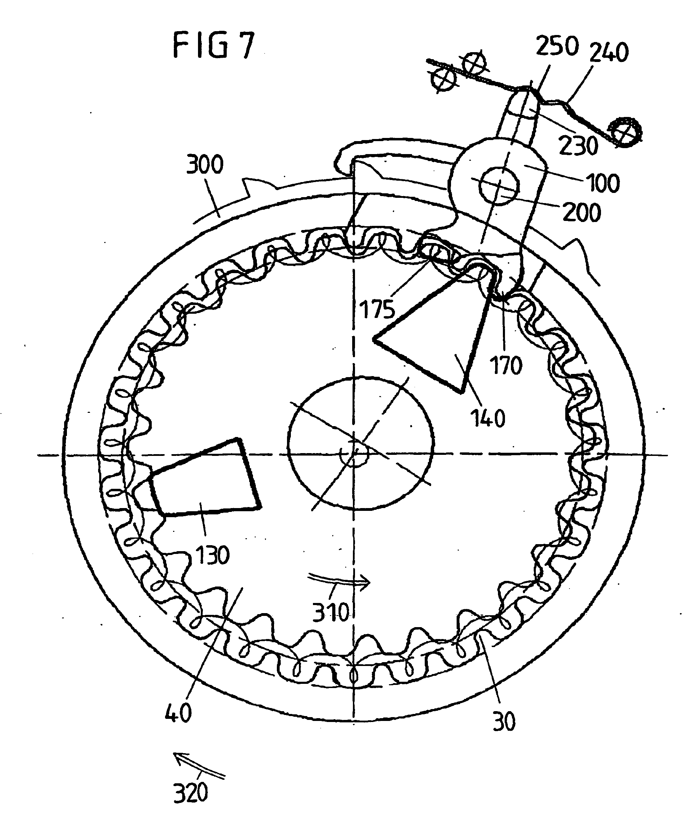

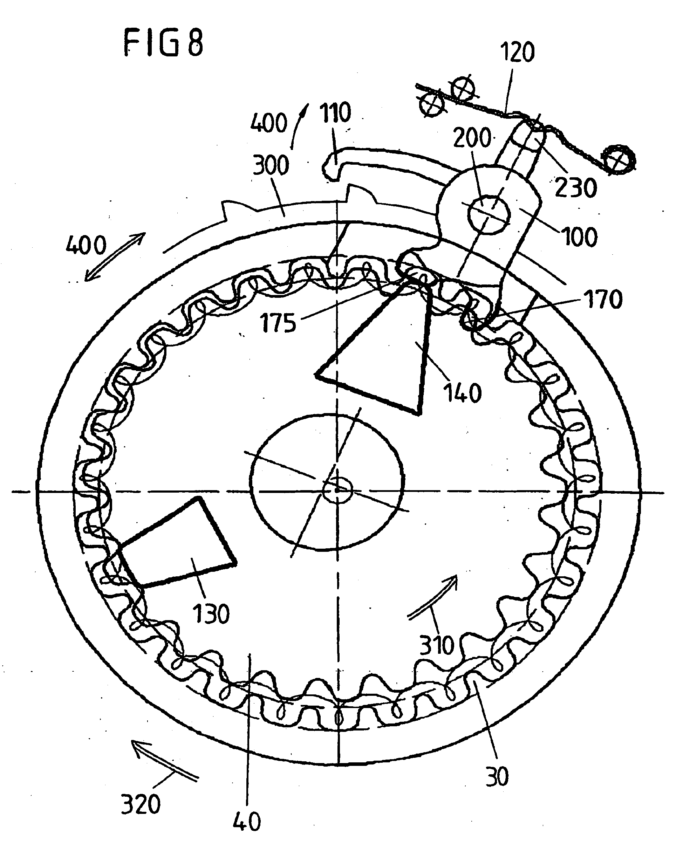

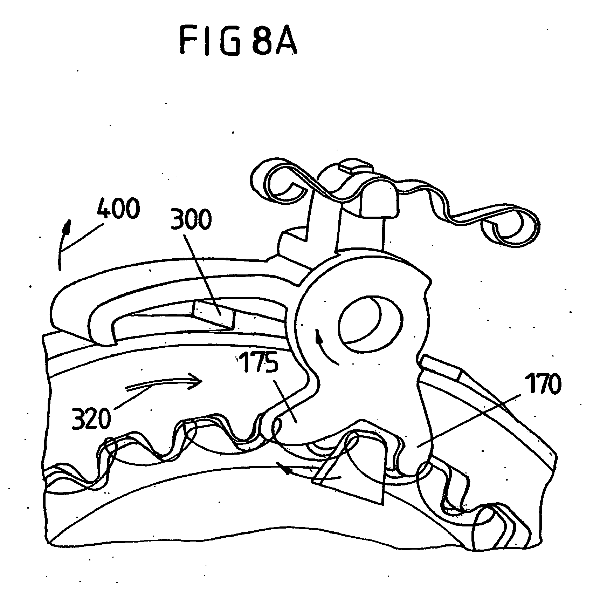

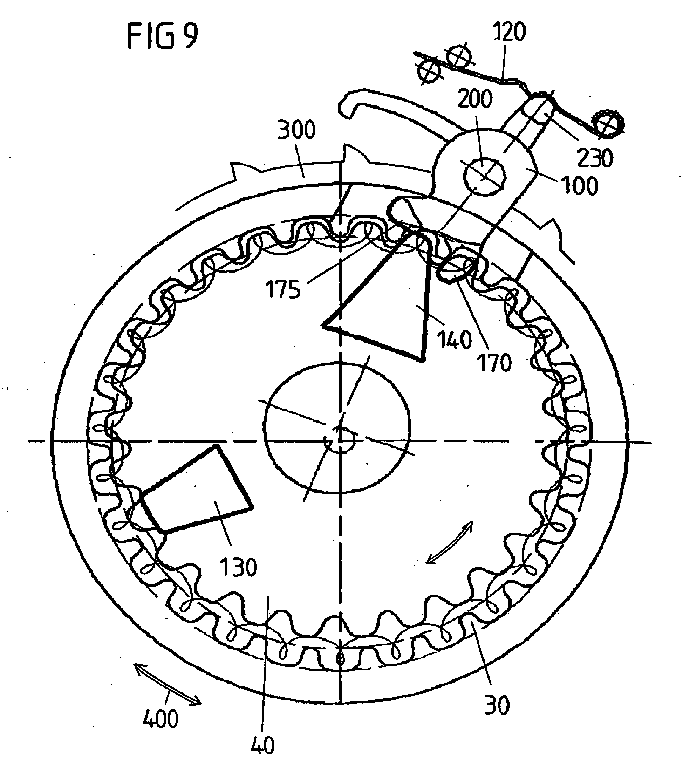

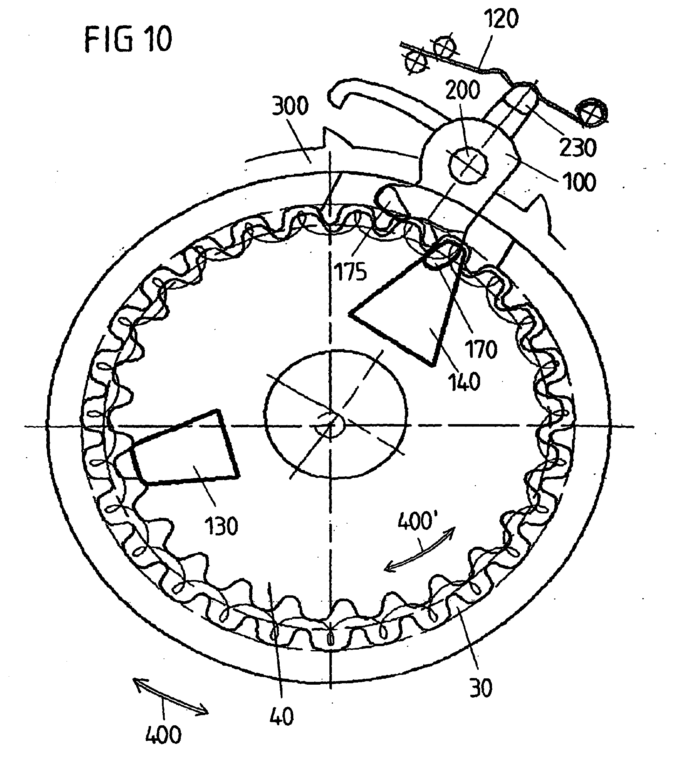

In den Figuren 7 bis 10 ist nun das Deaktivieren bzw. das Umschalten der Sperrklinke 100 von ihrer Sperrlage in ihre Freigabelage gezeigt. Man erkennt, wie der Ausschaltnocken 140 an dem Einschalthebel 170 der Sperrklinke 100 vorbeigeführt wird und in Eingriff mit dem Ausschalthebel 175 der Sperrklinke 100 gelangt. Dabei wird - wie sich insbesondere der Figur 8 entnehmen lässt - die Sperrklinke 100 in eine Drehbewegung um ihre Drehachse 200 versetzt, so dass sich der Rastarm 110 entlang der Pfeilrichtung 400 drehen kann. Dabei gelangt die Rastnase 230 der Sperrklinke 100 von der zweiten Ausnehmung 250 der Feder 120 in die erste Ausnehmung 240 der Feder 120 zurück.

Durch die Drehung des Rastarmes 110 ist dieser nun außer Eingriff mit dem Ratschenzahnrad 300, so dass sich das Ratschenzahnrad 300 und damit die Gurtspule des Gurtaufrollers 10 nun in beide Drehrichtungen drehen können; dies ist in der Figur 8 durch einen Doppelpfeil 400 angedeutet. Nach einer "Deaktivierung" der Sperrklinke kann der Gurtaufroller also beliebig ein und ausgezogen werden, wie dies im Normalbetrieb - dem ELR-Betrieb - gewünscht ist.

Das "Umschalten" der Sperrklinke 100 in die Freigabelage ist in dreidimensionaler Darstellung zusätzlich auch in der Figur 8a gezeigt.

Der Rastarm 110 der Sperrklinke 100 ist im Übrigen derart ausgestaltet, dass es zu einem lauten, gut hörbaren "Klick"-Geräusch kommt, wenn - in Sperrlage der Sperrklinke 100 - das Ratschenzahnrad in Gurtaufwickelrichtung gedreht wird. Das Klick-Geräusch wird dabei dadurch verursacht, dass an der "abfallenden" Flanke eines jeden Ratschenzahns des Ratschenzahnrades 300 der Rastarm 110 aufgrund der Federkraft der Feder 100 in Richtung Ratschenzahnrad 300 beschleunigt wird und auf diesem hörbar "aufschlägt":

Um sicherzustellen, dass der Ausschaltnocken 140 die Sperrklinke 100 nicht ungewollt wieder aktivieren kann, ist der Ausschaltnocken 140 derart angeordnet, dass er den Einschalthebel 170 der Sperrklinke 100 nach dem Umschalten nicht mehr auslenken kann. Der Ausschaltnocken 140 wird also - ohne dass es zu einer Aktivierung der Sperrklinke 100 kommt - an dem Einschalthebel 170 der Sperrklinke 100 vorbeigeführt.

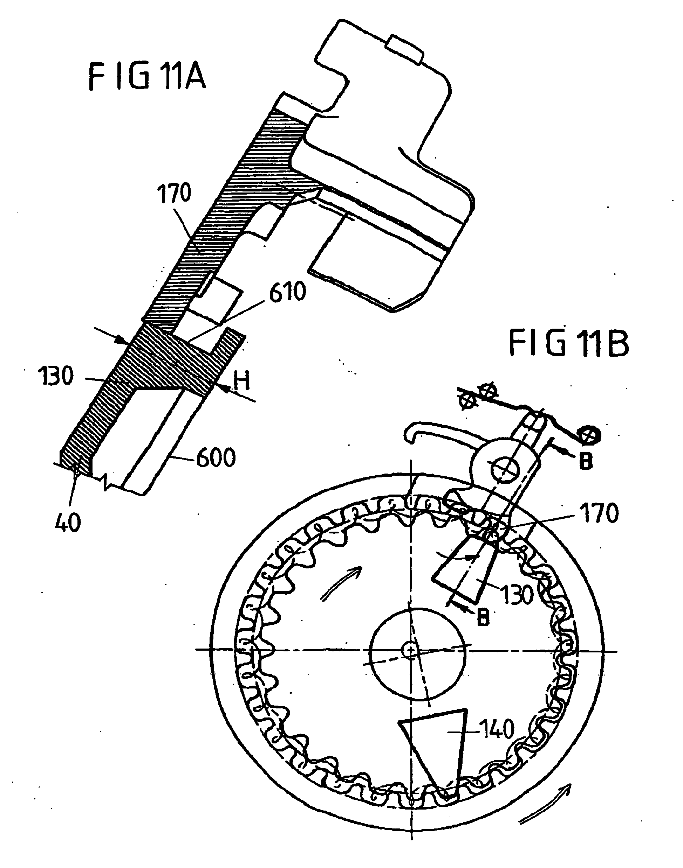

In den Figuren 11a und 11b ist dargestellt, wie der Einschalthebel 170 der Sperrklinke 100 und der Einschaltnocken 130 ausgestaltet sind, um zu gewährleisten, dass der Einschalthebel 170 von dem Einschaltnocken 130 ausgelenkt werden kann. Man erkennt, dass der Einschaltnocken 130 gegenüber der Grundfläche 600 der Nockenscheibe 40 erhaben ist und eine Höhe H aufweist. Die Höhe H ist dabei derart bemessen, dass die aktive Stirn- bzw. Schaltfläche 610 des Einschaltnockens 130 mit dem Einschalthebel 170 der Sperrklinke 100 in Kontakt treten und diesen auslenken kann. Dieses "in Kontakt Treten" des Einschaltnockens 130 mit dem Einschalthebel 170 ist in der Figur 11b nochmals in der Draufsicht gezeigt.

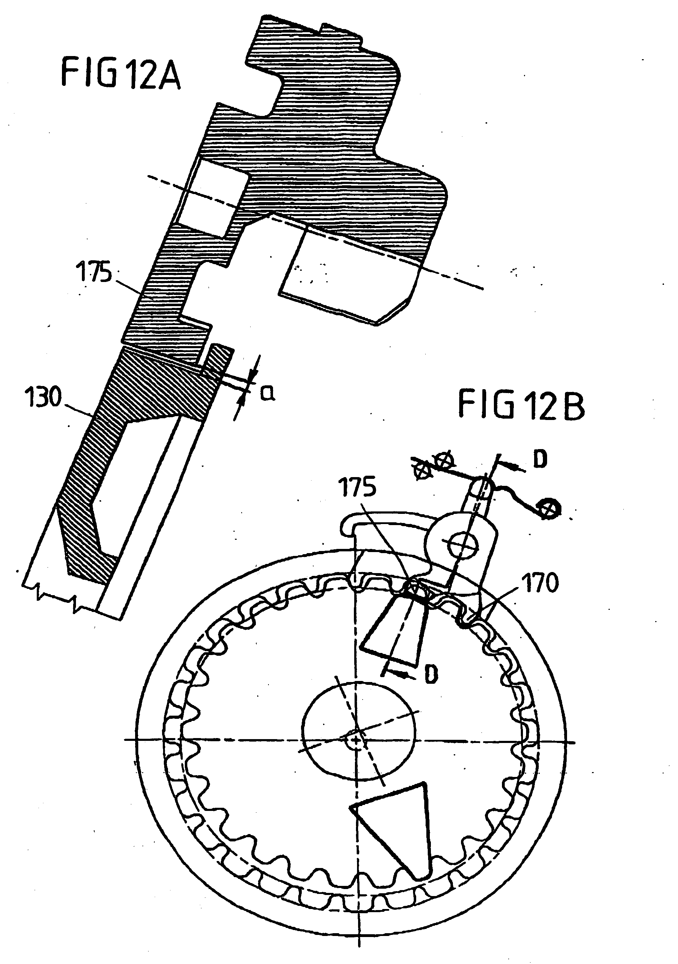

In den Figuren 12a und 12b lässt sich erkennen, wie der Ausschalthebel 175 ausgestaltet ist. Man erkennt, dass der Ausschalthebel 175 zu kurz ist, als dass er von dem Einschaltnocken 130 erfasst werden könnte, und zwar unabhängig davon, in welcher Stellung sich die Sperrklinke 100 befindet. Zwischen der aktiven Stirnfläche (Schaltfläche) 610 des Einschaltnockens 130 und dem Ausschalthebel 175 besteht also immer ein Abstand, der in der Figur 12a mit dem Bezugszeichen a markiert ist.

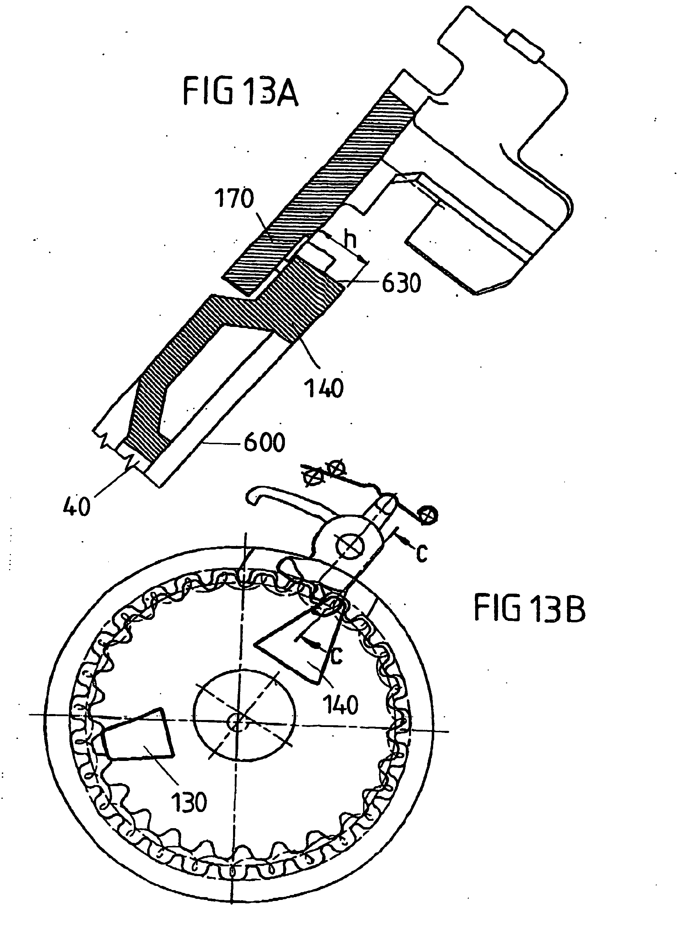

In den Figuren 13a und 13b ist die Dimensionierung des Ausschaltnockens 140 dargestellt. Man erkennt, dass der Ausschaltnocken 140 eine Höhe h aufweist, die derart bemessen ist, dass der Ausschaltnocken 140 nicht in Kontakt mit dem Einschalthebel 170 der Sperrklinke 100 kommen kann. Konkret ist der Einschalthebel 170 derart angeordnet, dass der Ausschaltnocken 140 unter" dem Einschalthebel 170 vorbeigeführt wird. Dieses Vorbeiführen des Ausschaltnockens 140 an dem Einschalthebel 170 ist in der Figur 13b im Detail gezeigt.

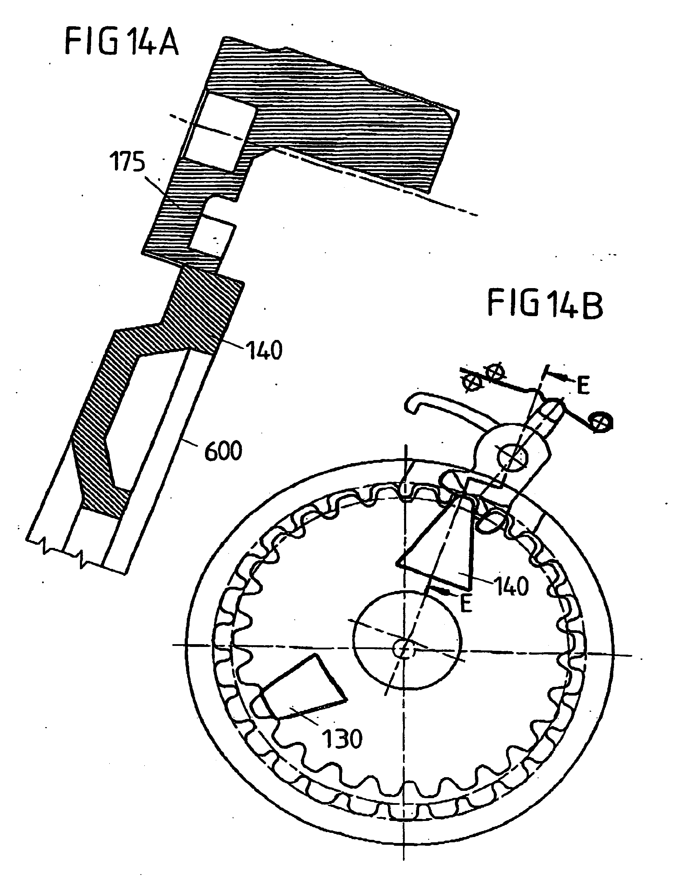

Darüber hinaus erkennt man in der Figur 13a, dass der Ausschaltnocken 140 sich derart in Richtung Sperrklinke erstreckt, dass dieser einen größeren Abstand vom Mittelpunkt der Nockenscheibe aufweist als der Einschaltnocken 130. Konkret weist die an dem äußeren Ende des Ausschaltnockens 140 befindliche Schaltfläche 630 des Ausschaltnockens 140 einen größeren Abstand vom Mittelpunkt der Nockenscheibe auf als die Schaltfläche 610 des Einschaltnockens 130. Deshalb kann der Ausschaltnocken 140 - im Gegensatz zu dem Einschaltnocken 130 - den Ausschalthebel 175 betätigen; denn die aktive Schaltfläche 630 des Ausschaltnockens 140 kann den Ausschalthebel 175 erfassen (vgl. Figuren 14a und 14b).

Zusammengefasst lässt sich damit feststellen, dass aufgrund des Vorhandenseins des Einschaltnockens 130 und des Ausschaltnockens 140 sichergestellt ist, dass es zu keinem ungewollten Ausschalten bzw. Deaktivieren der Sperrklinke 100 und zu keinem ungewollten Einschalten bzw. Aktivieren der Sperrklinke 100 kommen kann. Ein solches ungewolltes Umschalten der Sperrklinke 100 wird vermieden, indem der Einschaltnocken 130 und der Ausschaltnocken 140 beabstandet zueinander auf der Nockenscheibe 40 angeordnet sind.

Wie sich insbesondere der Figur 2 entnehmen lässt, weisen der Einschaltnocken 130 und der Ausschaltnocken 140 einen Winkel $\alpha$ zueinander auf. Dieser Winkel $\alpha$ ist so gewählt, dass die zum Drehen der Nockenscheibe 40 um diesen Winkel erforderliche Umdrehungszahl der Gurtspule der Länge des auf der Gurtspule aufgewickelten Sicherheitsgurtes je nach Fahrzeugspezifikation entspricht. Mit anderen Worten kann eine Anpassung des Gurtaufrollers an verschiedene Fahrzeugspezifikationen dadurch erreicht werden, dass der Winkel $\alpha$ entsprechend angepasst wird; konkret können die Schaltpunkte der Nockenscheibe durch Vorgabe des Winkel $\alpha$ und damit durch eine entsprechende Anordnung der Schaltnocken eingestellt werden, ohne dass eine Modifikation des Getriebes bzw. des Untersetzungsverhältnisses des Getriebes erforderlich ist. Im Übrigen kommt es nicht darauf an, dass die Länge des Sicherheitsgurtes exakt auf den Winkel $\alpha$ zwischen dem Einschaltnocken 130 und dem Ausschaltnocken 140 abgestimmt ist, da nämlich durch den Einschaltnocken 130 die Sperrklinke 100 ausschließlich aktiviert und durch den Ausschaltnocken 140 ausschließlich deaktiviert wird.

**Bezugszeichenliste**

| | |
|---|---|
| 10 | Gurtaufroller |
| 20 | Gehäuse |
| 30 | Innenzahnkranz |
| 40 | Nockenscheibe |
| 50 | Excenterscheibe |
| 60 | Drehachse |
| 100 | Sperrklinke |
| 110 | Rastarm |
| 120 | Feder |
| 130 | Einschaltnocken |
| 140 | Ausschaltnocken |
| 150 | Drehrichtung der Gurtspule |
| 160 | Drehrichtung der Nockenscheibe |
| 170 | Einschalthebel |
| 175 | Ausschalthebel |
| 200 | Drehachse der Sperrklinke |
| 220 | Schwenkrichtung |
| 230 | Rastnase |
| 240 | Erste Ausnehmung |
| 250 | Zweite Ausnehmung |
| 300 | Ratschenzahnrad |
| 310 | Drehrichtung |
| 320 | Drehrichtung |
| 400 | Schwenkrichtung |
| 410 | Drehrichtung |
| 420 | Drehrichtung |
| 600 | Grundfläche |
| 610 | Aktive Schaltfläche |
| 630 | Aktive Schaltfläche |
| $\alpha$ | Drehwinkel |

**Patentansprüche**

1. Gurtaufroller (10) für einen Sicherheitsgurt mit einer drehfest mit einer Gurtspule des Gurtaufrollers verbundenen Excenterscheibe (50), einer unmittelbar durch die Excenterscheibe (50) angetriebenen Nockenscheibe (40) und einer Sperrklinke (100), die in einer Sperrlage ein sich mit der Gurtspule des Gurtaufrollers (10) mitdrehendes Ratschenzahnrad (300) in Gurtausziehdrehrichtung des Sicherheitsgurtes blockiert und in einer Freigabelage das Ratschenzahnrad (300) unbeeinflusst lässt,

- wobei die Sperrklinke (100) von der Freigabelage in die Sperrlage und umgekehrt von der Sperrlage in die Freigabelage mit der Nockenscheibe (40) umschaltbar ist, und
- wobei die Nockenscheibe (40) einen Einschaltnocken (130) zum Einschalten der Sperrlage der Sperrklinke (100) und einen Ausschaltnocken (140) zum Einschalten der Freigabelage der Sperrklinke (100) aufweist,

**dadurch gekennzeichnet, dass**

- der Einschaltnocken und der Ausschaltnocken (140) getrennt angeordnet sind und
- dass die Sperrklinke (100) einen Einschalthebel (170), der ausschließlich mit dem Einschaltnocken (130) zusammenwirkt, und einen Ausschalthebel (175), der ausschließlich mit dem Ausschaltnocken (140) zusammenwirkt, aufweist.

2. Gurtaufroller nach Anspruch 1, **dadurch gekennzeichnet, dass** die Sperrklinke (100) um eine Drehachse (200) drehbar gelagert ist.

3. Gurtaufroller nach Anspruch 2, **dadurch gekennzeichnet, dass** die Drehachse (200) am Gehäuse (20) des Gurtaufrollers (10) angeordnet ist.

4. Gurtaufroller nach einem der vorangehenden Ansprüche, **dadurch gekennzeichnet, dass** die Sperrklinke (100) in der Sperrlage bzw. in der Freigabelage durch eine Feder (120) arretiert ist.

5. Gurtaufroller nach Anspruch 4, **dadurch gekennzeichnet, dass** die Feder (120) eine Metallfeder ist.

6. Gurtaufroller nach Anspruch 4, **dadurch gekennzeichnet, dass** die Feder eine Kunststofffeder ist.

7. Gurtaufroller nach Anspruch 6, **dadurch gekennzeichnet, dass** die Feder ein am Gehäuse (20) des Gurtaufrollers angespritztes Kunststoffelement des Gurtaufrollers (10) ist.

8. Gurtaufroller nach einem der vorangehenden Ansprüche 4 bis 7, **dadurch gekennzeichnet, dass** die Feder (120) zwei benachbarte Ausnehmungen (240, 250) aufweist, von denen eine eine Rastnase (230) der Sperrklinke (100) in der Sperrlage fixiert und von denen die andere die Rastnase (230) der Sperrklinke (100) in der Freigabelage fixiert

9. Gurtaufroller nach einem der vorangehenden Ansprüche 4 bis 7, **dadurch gekennzeichnet, dass** die Feder beim Umschalten der Sperrklinke von der Sperrlage in die Freigabelage und umgekehrt von der Freigabelage in die Sperrlage einen Totpunkt überwinden muss.

10. Gurtaufroller nach einem der vorangehenden Ansprüche, **dadurch gekennzeichnet, dass** der Einschalthebel (170) derart dimensioniert und angeordnet ist, dass er von dem Ausschaltnocken (140) der Nockenscheibe (40) nicht ausgelenkt und/oder berührt werden kann und dass der Ausschalthebel (175) der Sperrklinke (100) derart dimensioniert und angeordnet ist, dass er von dem Einschaltnocken (130) der Nockenscheibe (140) nicht berührt und/oder ausgelenkt werden kann.

11. Gurtaufroller nach Anspruch 10, **dadurch gekennzeichnet, dass** einer der beiden Schaltnocken (140) der Nockenscheibe (40) eine aktive Schaltfläche aufweist, die vom Mittelpunkt der Nockenscheibe (40) einen größeren Abstand aufweist als die aktive Schaltfläche des anderen Schaltnockens (140).

12. Gurtaufroller nach Anspruch 10 oder 11, **dadurch gekennzeichnet, dass** der Ausschaltnocken (140) und der Einschaltnocken (130) gegenüber der übrigen Nockenscheibe (40) erhaben sind.

13. Gurtaufroller nach Anspruch 12, **dadurch gekennzeichnet, dass** einer der beiden Schaltnocken (130) erhabener ist als der andere der beiden Schaltnocken (140).

14. Gurtaufroller nach einem der vorangehenden Ansprüche, **dadurch gekennzeichnet, dass** die Nockenscheibe (40) einen äußeren verzahnten Rand aufweist, dessen Zähne von einem gehäusefesten Innenzahnkranz (30) mit größerem Durchmesser und mit komplementären Zähnen derart umgeben sind, dass die Nockenscheibe (40) auf jeweils einem begrenzten Umfangsbereich mit dem Innenzahnkranz (30) in kämmendem Eingriff steht und dass diametral gegenüber die beiden Anordnungen von Zähnen einen solchen radialen Abstand aufweisen, dass sich die Nockenscheibe beim Drehen der Gurtspule des Gurtaufrollers (10) auf dem Innenzahnkranz (30) abwälzt.

15. Gurtaufroller nach einem der vorangehenden Ansprüche, **dadurch gekennzeichnet, dass** die Excenterscheibe (50), der Innenzahnkranz (30) und die Nockenscheibe (40) ein Untersetzungsgetriebe bilden.

16. Gurtaufroller nach Anspruch 15, **dadurch gekennzeichnet, dass** die Nockenscheibe (40) 26 Zähne und der Innenzahnkranz (30) 27 Zähne aufweist.

17. Gurtaufroller nach einem der vorangehenden Ansprüche, **dadurch gekennzeichnet, dass** die Excenterscheibe (50), der Innenzahnkranz (30) und die Nockenscheibe (40) ein Taumelgetriebe bilden.

**Claims**

1. Belt retractor (10) for a seat belt, having an eccentric disc (50) which is connected in a rotationally fixed manner to a belt reel of the belt retractor, a cam disc (40) which is driven directly by the eccentric disc (50) and a blocking pawl (100) which, in a blocking position, blocks a toothed ratchet wheel (300), which rotates at the same time as the belt reel of the belt retractor (10), in the belt pull-out direction of rotation of the seat belt and, in a release position, leaves the toothed ratchet wheel (300) unaffected,

   - it being possible for the blocking pawl (100) to be switched over from the release position into the blocking position and vice versa from the blocking position into the release position with the cam disc (40), and
   - the cam disc (40) having an engaging cam (130) for engaging the blocking position of the blocking pawl (100) and a disengaging cam (140) for engaging the release position of the blocking pawl (100),

   **characterized in that**

   - the engaging cam and the disengaging cam (140) are arranged separately and
   - **in that** the blocking pawl (100) has an engaging lever (170) which interacts exclusively with the engaging cam (130), and a disengaging lever (175) which interacts exclusively with the disengaging cam (140).

2. Belt retractor according to Claim 1, **characterized in that** the blocking pawl (100) is mounted rotatably about an axis of rotation (200).

3. Belt retractor according to Claim 2, **characterized in that** the axis of rotation (200) is arranged on the housing (20) of the belt retractor (10).

4. Belt retractor according to one of the preceding claims, **characterized in that** the blocking pawl (100) is locked in the blocking position or in the release position by a spring (120).

5. Belt retractor according to Claim 4, **characterized in that** the spring (120) is a metal spring.

6. Belt retractor according to Claim 4, **characterized in that** the spring is a plastic spring.

7. Belt retractor according to Claim 6, **characterized in that** the spring is a plastic element of the belt retractor (10) that has been injection-moulded on the housing (20) of the belt retractor.

8. Belt retractor according to one of the preceding Claims 4 to 7, **characterized in that** the spring (120) has two adjacent recesses (240, 250), one of which fixes a latching lug (230) of the blocking pawl (100) in the blocking position and the other of which fixes the latching lug (230) of the blocking pawl (100) in the release position.

9. Belt retractor according to one of the preceding Claims 4 to 7, **characterized in that** when the blocking pawl is switched over from the blocking position into the release position and conversely from the release position into the blocking position, the spring has to overcome a dead-centre position.

10. Belt retractor according to one of the preceding claims, **characterized in that** the engaging lever (170) is dimensioned and arranged in such a manner that it cannot be deflected and/or touched by the disengaging cam (140) of the cam disc (40), and **in that** the disengaging lever (175) of the blocking pawl (100) is dimensioned and arranged in such a manner that it cannot be touched and/or deflected by the engaging cam (130) of the cam disc (140).

11. Belt retractor according to Claim 10, **characterized in that** one of the two switching cams (140) of the cam disc (40) has an active switching surface which is at a greater distance from the centre point of the cam disc (40) than the active switching surface of the other switching cam (140).

12. Belt retractor according to Claim 10 or 11, **characterized in that** the disengaging cam (140) and the engaging cam (130) are raised in comparison with the rest of the cam disc (40).

13. Belt retractor according to Claim 12, **characterized in that** one of the two switching cams (130) is raised more than the other of the two switching cams (140).

14. Belt retractor according to one of the preceding claims, **characterized in that** the cam disc (40) has an outer, toothed edge, the teeth of which are surrounded by an inner toothed ring (30), which is fixed on the housing, is of larger diameter and has complementary teeth, in such a manner that the cam disc (40) is in meshing engagement with the inner toothed ring (30) over a limited circumferential region in each case, and **in that** the two arrangements of teeth are at such a radial distance diametrically opposite each other that the cam disc rolls along the inner toothed ring (30) when the belt reel of the belt retractor (10) is rotated.

15. Belt retractor according to one of the preceding claims, **characterized in that** the eccentric disc (50), the inner toothed ring (30) and the cam disc (40) form a step-down gear.

16. Belt retractor according to Claim 15, **characterized in that** the cam disc (40) has 26 teeth and the inner toothed ring (30) has 27 teeth.

17. Belt retractor according to one of the preceding claims, **characterized in that** the eccentric disc (50), the inner toothed ring (30) and the cam disc (40) form a wobble gear.

**Revendications**

1. Enrouleur (10) pour une ceinture de sécurité, comprenant un disque (50) à excentrique relié avec verrouillage rotatif à une bobine enrouleuse de l'enrouleur de ceinture ; un disque (40) à cames, entraîné directement par le disque (50) à excentrique ; et un cliquet de blocage (100) qui immobilise dans une position de blocage, dans la direction rotatoire d'extraction de la ceinture de sécurité, une roue dentée (300) à rochet tournant conjointement à la bobine enrouleuse de l'enrouleur (10), et qui n'exerce aucune influence sur ladite roue dentée (300) à rochet dans une position de libération,

   - le cliquet de blocage (100) pouvant passer, avec le disque (40) à cames, de la position de libération à la position de blocage et, inversement, de ladite position de blocage à ladite position de libération, et
   - ledit disque (40) à cames comprenant une came d'engagement (130) pour enclencher la position de blocage du cliquet de blocage (100), et une came de désengagement (140) pour déclencher la position de libération dudit cliquet de blocage (100),

   **caractérisé par le fait**

   - **que** la came d'engagement et la came de dégagement (140) occupent des positions distinctes ; et
   - **que** le cliquet de blocage (100) comprend un levier d'engagement (170) qui coopère exclusivement avec la came d'engagement (130), et un levier de dégagement (175) qui coopère exclusivement avec la came de dégagement (140).

2. Enrouleur de ceinture selon la revendication précédente, **caractérisé par le fait que** le cliquet de blocage (100) est monté rotatif autour d'un axe de rotation (200).

3. Enrouleur de ceinture selon la revendication 2, **caractérisé par le fait que** l'axe de rotation (200) est disposé sur le boîtier (20) dudit enrouleur (10).

**4.** Enrouleur de ceinture selon l'une des revendications précédentes, **caractérisé par le fait que** le cliquet de blocage (100) est respectivement arrêté, par l'intermédiaire d'un ressort (120), dans la position de blocage ou dans la position de libération.

**5.** Enrouleur de ceinture selon la revendication 4, **caractérisé par le fait que** le ressort (120) est un ressort métallique.

**6.** Enrouleur de ceinture selon la revendication 4, **caractérisé par le fait que** le ressort est un ressort en matière plastique.

**7.** Enrouleur de ceinture selon la revendication 6, **caractérisé par le fait que** le ressort est un élément dudit enrouleur (10) qui est venu d'injection solidaire en matière plastique sur le boîtier (20) dudit enrouleur (10).

**8.** Enrouleur de ceinture selon l'une des revendications précédentes 4 à 7, **caractérisé par le fait que** le ressort (120) présente deux évidements voisins (240, 250) dont l'un consigne à demeure un bec encliquetable (230) du cliquet de blocage (100) dans la position de blocage, et dont l'autre consigne à demeure ledit bec encliquetable (230) dudit cliquet de blocage (100) dans la position de libération.

**9.** Enrouleur de ceinture selon l'une des revendications précédentes 4 à 7, **caractérisé par le fait que** le ressort doit surmonter un point mort lors du passage du cliquet de blocage de la position de blocage à la position de libération et, inversement, de ladite position de libération à ladite position de blocage.

**10.** Enrouleur de ceinture selon l'une des revendications précédentes, **caractérisé par le fait que** le levier d'engagement (170) est dimensionné et agencé de façon telle qu'il ne puisse pas être dévié et/ou touché par la came de dégagement (140) du disque (40) à cames ; et **par le fait que** le levier de désengagement (175) du cliquet de blocage (100) est dimensionné et agencé de façon telle qu'il ne puisse pas être touché et/ou dévié par la came d'engagement (130) dudit disque (40) à cames.

**11.** Enrouleur de ceinture selon la revendication 10, **caractérisé par le fait que** l'une (140) des deux cames d'actionnement du disque (40) à cames possède une surface d'actionnement opérante séparée, d'avec l'axe dudit disque (40) à cames, d'une plus grande distance que la surface d'actionnement opérante de l'autre came d'actionnement (130).

**12.** Enrouleur de ceinture selon la revendication 10 ou 11, **caractérisé par le fait que** la came de dégagement (140) et la came d'engagement (130) sont rehaussées par rapport au reste du disque (40) à cames.

**13.** Enrouleur de ceinture selon la revendication 12, **caractérisé par le fait que** l'une (130) des deux cames d'actionnement est davantage rehaussée que l'autre (140) des deux cames d'actionnement.

**14.** Enrouleur de ceinture selon l'une des revendications précédentes, **caractérisé par le fait que** le disque (40) à cames comporte un bord extérieur denté dont les dents sont entourées par une couronne dentée (30) faisant corps avec le boîtier, présentant un diamètre supérieur et des dents complémentaires, de telle sorte que ledit disque (40) à cames soit respectivement en prise d'engrènement avec ladite couronne dentée (30) dans une région circonférentielle limitée ; et **par le fait que**, diamétralement à l'opposé, les deux ensembles de dents présentent un espacement radial tel que le disque à cames roule sur la couronne dentée (30) lors de la rotation de la bobine enrouleuse dudit enrouleur (10).

**15.** Enrouleur de ceinture selon l'une des revendications précédentes, **caractérisé par le fait que** le disque (50) à excentrique, la couronne dentée (30) et le disque (40) à cames matérialisent une transmission démultiplicatrice.

**16.** Enrouleur de ceinture selon la revendication 15, **caractérisé par le fait que** le disque (40) à cames compte vingt-six dents, et la couronne dentée (30) compte vingt-sept dents.

**17.** Enrouleur de ceinture selon l'une des revendications précédentes, **caractérisé par le fait que** le disque (50) à excentrique, la couronne dentée (30) et le disque (40) à cames matérialisent une transmission oscillante.

# FIG 1

# FIG 2

# FIG 3

## FIG 4

FIG 5

# FIG 5A

FIG 6

FIG 7

# FIG 8

# FIG 8A

FIG 9

FIG 10

FIG 11A

170

610

130

H

600

40

FIG 11B

170

130

B

B

140

FIG 12A

175

130

a

FIG 12B

175

170

D

D

FIG 13A

170

h

630

140

600

40

FIG 13B

c

c

140

130

FIG 14A

175

140

600

FIG 14B

E

140

E

130